(19) Europäisches Patentamt
European Patent Office
Office européen des brevets

(11) Publication number: 0 122 759
B1

(12) # EUROPEAN PATENT SPECIFICATION

(45) Date of publication of patent specification: 11.01.89

(51) Int. Cl.⁴: C 08 L 69/00, C 08 G 63/12, C 08 G 63/66

(21) Application number: 84302383.9

(22) Date of filing: 06.04.84

(54) **Polycarbonate compositions and use thereof.**

(30) Priority: 14.04.83 US 484790

(43) Date of publication of application:
24.10.84 Bulletin 84/43

(45) Publication of the grant of the patent:
11.01.89 Bulletin 89/02

(84) Designated Contracting States:
AT BE CH DE FR GB IT LI LU NL SE

(56) References cited:
DE-B-1 907 768
US-A-3 269 971

(73) Proprietor: HENKEL CORPORATION
7900 West 78th Street
Minneapolis Minnesota 55435 (US)

(72) Inventor: Lindner, Robert Arthur
3344 Park Avenue Apartment 18
Weehawken New Jersey 07087 (US)

(74) Representative: von Kreisler, Alek, Dipl.-Chem et al
Patentanwälte Dr.-Ing. Schönwald Dr.-Ing. Eishold; Dr. Fues Dipl.-Chem. von Kreisler; Dipl.Chem. Keller Dipl.-Ing. Selting; Dr. Werner
Deichmannhaus am Hauptbahnhof
D-5000 Köln 1 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 122 759 B1

**Description**

This invention relates to polycarbonate compositions, lubricant esters and their use in the manufacture of polycarbonate articles.

It has long been known to form polycarbonate articles using a variety of resins as later described. An advantage to polycarbonate resins is that these materials may be formulated to be clear or tinted to give various shaped articles which are still substantialy transparent.

It has also been found, in processing polycarbonates that a variety of materials used to aid in obtaining the polycarbonate article have deleterious effects on the polycarbonate resins, particularly effecting the clarity of the shaped article. For a general discussion of polycarbonate resin processing the reader is directed to United States Patent number 4425458 to Lindner et al.

DE—B—1 907 768 relates to lubricating agents used in processing thermoplastic polymers. These lubricating agents are esters based upon polyols, long-chain monocarboxylic acids ($C_{12-30}$) and dicarboxylic acids, preferably esters based upon adipinic acid and pentaerythritol, where the monocarboxylic acids are oleic acid and stearic acid.

Thus it is an objective of the present invention to provide a polycarbonate resin molding composition sufficiently lubricated as to give good mold release and to provide shaped or molded articles which are clear, i.e. which have high transparency.

In one aspect, the present invention provides a polycarbonate forming composition comprising a polycarbonate resin and from 0.01 to 1% by weight, relative to the weight of said polycarbonate resin of an ester of formula I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

wherein y has an average value of from 3 to 12, x has a value of from 2 to 6 and each R, which may be the same or different, is an organic moiety having from 5 to 9 carbon atoms.

The composition of the invention can be used to produce formed polycarbonate articles, and especially advantageously articles which are substantially clear, i.e. transparent.

Thus in a further aspect, the invention provides a process for the manufacture of a polycarbonate article, said process comprising forming said article from a composition comprising in admixture a polycarbonate resin and from 0.01 to 1% by weight, relative to the weight of said polycarbonate resin of an ester of formula I (as defined above).

The polycarbonate resins suitable for use in the process and composition of the present invention include homopolycarbonates and copolycarbonates which are based, for example, on one or more of the following bisphenols: hydroquinone, resorcinol, dihydroxydiphenyls, bis-(hydroxyphenyl)-alkanes, bis-(hydroxyphenyl)-cycloalkanes, bis-(hydroxyphenyl)-sulphides, bis-(hydroxyphenyl)-ethers, bis-(hydroxyphenyl)-ketones, bis(hydroxyphenyl-sulphoxides, bis-(hydroxyphenyl)-sulphones and a,a-bis-(hydroxyphenyl)-diisopropyl-benzenes, as well as their nuclear alkylated and nuclear-halogenated derivatives. These and further suitable aromatic dihydroxy compounds are described, for example, in United States patents numbers 3,028,365; 2,999,835; 3,148,172; 3,271,368; 2,991,273; 3,271,367; 3,280,078; 3,014,891 and 2,999,846; in German Offenlegungsschriften (German Published Specifications) 1,570,703; 2,063,050; 2,063,052; 2,211,956; and 2,211,957; in French Patent Specification 1,561,518 and in the monograph "H. Schnell, Chemistry and Physics of Polycarbonats, Interscience Publishers, New York, 1964".

Preferred bisphenols are those of the formula

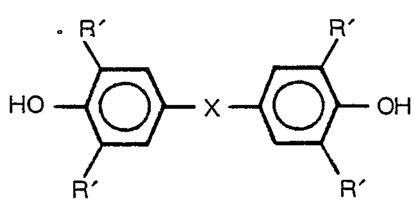

(II)

in which R′ is identical or different and denotes H, $C_1$—$C_4$-alkyl, Cl or Br; and in which X is a bond, $C_1$—$C_8$ alkylene, $C_2$—$C_8$-alkylidene, $C_5$—$C_{15}$-cycloalkylene, $C_5$—$C_{15}$-cycloalkylidene, —$SO_2$— or a group of formula III

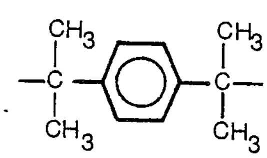

(III)

Examples of these bisphenols as 4,4′ - dihydroxydiphenyl, 2,2 - bis - (4 - hydroxyphenyl) - propane, 2,4 - bis(4 - hydroxyphenyl) - 2 - methylbutane, 1,1 - bis - (4 - hydroxyphenyl) - cyclohexane, a,a - bis -

(4 - hydroxyphenyl) - p - diisopropylbenzene, 2,2 - bis - (3 - methyl - 4 - hydroxyphenyl) - propane, 2,2 - bis - (3 - chloro - 4 - hydroxyphenyl) - propane, bis - (3,5 - dimethyl - 4 - hydroxyphenyl) - methane, 2,2 - bis - (3,5 - dimethyl - 4 - hydroxyphenyl) - propane, bis - (3,5 - dimethyl - 4 - hydroxyphenyl) - sulphone, 2,4 - bis - (3,5 - dimethyl - 4 - hydroxyphenyl) - 2 - methylbutane, 1,1 - bis - (3,5 - dimethyl - 4 - hydroxyphenyl) - cyclohexane, a,a - bis - (3,5 - dimethyl - 4 - hydroxyphenyl) - p - diisopropylbenzene, 2,2 - bis - (3,5 - dichloro - 4 - hydroxyphenyl) - propane and 2,2 - bis(3,5 - dibromo - 4 - hydroxyphenyl) - propane.

Examples of particularly preferred bisphenols are: 2,2 - bis - (4 - hydroxyphenyl) - propane, 2,2 - bis - (3,5 - dimethyl - 4 - hydroxyphenyl) - propane, 2,2 - bis - (3,5 - dichloro - 4 - hydroxyphenyl) - propane, 2,2 - bis - (3,5 - dibromo - 4 - hydroxyphenyl) - propane, and 1,1 - bis - (4 - hydroxyphenyl) - cyclohexane.

Preferred aromatic polycarbonates are those which are based on one or more of the bisphenols mentioned as being preferred. Particularly preferred copolycarbonates are those based on 2,2 - bis - (4 - hydroxyphenyl) - propane and one of the other bisphenols mentioned as being particularly preferred. Further particularly preferred polycarbonates are those based solely on 2,2 - bis - (4 - hydroxyphenyl) - propane or 2,2 - bis - (3,5 - dimethyl - 4 - hydroxyphenyl) - propane.

The aromatic polycarbonates can be prepared in accordance with known processes, such as, for example, in accordance with the melt trans-esterification process from bisphenols and diphenyl carbonate and the two-phase boundary process from bisphenols and phosgene, as described in the above mentioned literature.

The aromatic high-molecular weight polycarbonates can be branched due to the incorporation of small amounts, preferably of between 0.05 and 2.0 mol% (relative to diphenols employed), of trifunctional or more than trifunctional compounds, especially compounds with three or more phenolic hydroxyl groups.

Polycarbonates of this type are described, for example, in German Offenlegungsschriften (German Published Specifications) 1,570,533; 1,595,762; 2,116,974; 2,113,347; and 2,500,092; British Patent Specificaton 1,079,821, and United States patent number 3,544,514.

Some examples of compounds with three or more than three phenolic hydroxyl groups which can be used are phloroglucinol, 4,6 - dimethyl - 2,4,6 - tri - (4 - hydroxyphenyl) - heptane - 2, 4,6 - dimethyl - 2,4,6 - tri - (4 - hydroxyphenyl) - heptane, 1,4,5 - tri - (4 - hydroxyphenyl) - benzene, 1,1,1 - tri - (4 - hydroxyphenyl) - ethane, tri - (4 - hydroxyphenyl) - phenyl - methane, 2,2 - bis - [4,4 - bis(4 - hydroxyphenyl) - cyclohexyl] - propane, 2,4 - bis(4 - hydroxyphenylisopropyl) - phenol, 2,6 - bis - (2 - hydroxy - 5' - methylbenzyl) - 4 - methylphenol, 2 - (4 - hydroxyphenyl) - 2 - (2,4 - dihydroxyphenyl) - propane, hexa[4 - (4 - hydroxyphenylisopropyl)phenyl] orthoterephthalic acid ester, tetra - (4 - hydroxyphenyl) - methane, tetra - (4 - (4 - hydroxyphenylisopropyl) - phenoxy) - methane and 1,4 - bis[(4',4'' - dihydroxytriphenyl)methyl] - benzene. Some of the other trifunctional compounds are 2,4 - dihydroxy - benzoic acid, trimesic acid, cyanuric chloride and 3,3 - bis - (4 - hydroxyphenyl) - 2 - oxo - 2,3 - dihydroindole.

The aromatic high-molecular polycarbonates as a rule suitable have mean weight-average molecular weights M of at least 10,000, especially of 10,000 to 200,000, preferably of 20,000 to 80,000, determined by measuring the relative viscosity in $CH_2Cl_2$ at 25°C and a concentration of 0.5% by weight.

The thermoplastic polycarbonate molding compositions find use in several areas. Such examples of use for the compositions of the present invention incorporating polycarbonate resins and mold release agents include uses in the electrical industry and the optical field such as the stripping of sockets, coiled bodies, complicated housings, projector housings, switch cabinet bottoms and other similar applications.

The complex ester of formula I is utilized with the polycarbonate in the manner of similar prior polycarbonate formulations. The level of use of the complex ester to the polycarbonate is from about 0.01% to about 1%, preferably from about 0.10% to about 0.70% by weight of the polycarbonate.

In still further aspects of the invention there are thus provided esters of formula I (as defined above) and their use in the manufacture of polycarbonate articles.

The ester of formula I may be formed by first reacting pentaerythritol with a relatively short-chained fatty acid RCOOH to form a partial ester of pentaerythritol. The reaction is conducted so that the pentaerythritol is not fully deprived of all of the hydroxyl hydrogen atoms in forming the partial ester. Thereafter, this partial ester of pentaerythritol is further reacted with a short chain saturated organic diacid $HOOC(CH_2)_xCOOH$. The diacid cross-links the various partial esters of pentaerythritol and the reaction is controlled to give complex esters which fall within the scope of formula I.

Thus in another aspect the invention provides a process for the preparation of esters of formula I (as defined above) comprising incompletely esterifying pentaerythritol with a carboxylic acid of formula RCOOH (where R is as defined above) or an ester-forming derivative thereof and subsequently reacting pentaerythritol esters so formed with a dicarboxylic acid of formula $HOOC(CH_2)_xCOOH$ (where x is as defined above) or an ester-forming derivative thereof.

The particular values on the partial ester of the present invention are that the value of x will be 2 to 6, preferably 2 to 4 thereby describing the partial ester as having a succinic or adipic acid backbone. The value of y as averaging 3 to 12, preferably 5, 6 or 7 indicates that the reaction has been controlled such that the ratios used of the diacid and the partial ester of pentaerythritol are such as to give an average repeating chain length within the scope of formula I.

The identity of R is particularly important in the present invention. First, the acids used to partially esterify the pentaerythritol are preferably saturated materials. That is, unsaturated acids tend to break down and are not as useful in polycarbonate resin systems which may be exposed to ultraviolet light. Thus, to avoid discoloration the polycarbonate should not contain an unsaturated acid at any point where the unsaturated acid will remain in the polycarbonate resin. Secondly, the value of R as to the chain length should be between 5 and 9 carbons and desirably should also be linear. R is thus suitably a $C_{5-9}$ alkyl group, preferably linear. It is most preferred that R have a value of 7 to 9 carbons and should correspond to the residues of capric or caprylic acids.

Among the advantages of the present invention are that the polycarbonate resin will be sufficiently lubricated to give good mold release and clarity. A distinct advantage in the present invention is that the materials herein, unlike prior art compounds, are liquid at ambient temperature. Therefore, mixing and storage of the materials which heretofore would have been a flake material is quite simple.

It may be noted here that compounds of formula I except that R is a 16 or 18 carbon atom containing moiety are known.

Throughout the specification and claims, percentages and ratios are by weight, temperatures are degrees Celsius and pressures are gauge.

The following non-limiting Examples are provided to illustrate the scope of the present invention:

Example I

A complex ester is prepared in accordance with the present invention as follows. Into a reaction vessel of suitable size are added 408 parts of pentaerythritol, 1314 parts of caprylic acid and 3 parts of tin oxide. The reaction mixture is heated to a range of between 115°C and 180°C and the water from the reaction is recovered.

The reaction is substantially complete after a period of about 4½ hours. The acid value of the product is 70.5. The partial ester thus formed is then converted to the complex ester by reacting 1281 parts of the partial ester formed above with 216 parts of adipic acid and 3 gms of tin oxide. This reaction is conducted over a period of seven hours at a temperature of 210°C. The acid value of the end product is 25.2, a hydroxyl value of 33.24. The estimated polymeric value of y is 6.

Example II

A reaction is conducted substantially similarly to Example I where 239 parts of pentaerythritol and 760 parts of capric acid are added to a reaction vessel together with 2.2 parts of tin oxide.

This mixture is heated to a temperature of 200°C and the reaction is continued for a period of six hours. When the reaction is substantially complete the acid value is 5.33 and the hydroxyl value is 98.1.

The partial ester formed above in the amount of 1052 parts is reacted with 113.5 parts of adipic acid. The reaction mixture is heated to 180°C and reaction is substantially complete after about 7.5 hours. At the end of the reaction the acid value is 27.72 and the estimated average value of y is 6.

Example III

A polycarbonate obtained under the trademark MERLON M 50 F-1000 had included therein 0.2 parts by weight of the lubricant ester of Example II. The lubricant was blended onto hot pre-dried polycarbonate resin granules in a Horbart mixer.

The blend of the lubricant and the polycarbonate is then intimately compounded on a single screw 1¼ inch (3.18 cm) TEC extruder and pelletized.

The combined lubricant and polycarbonate resin is tested for mold release capabilities by using a 28 ton (25.4 Mg) Arburg Injection Molding machine equipped with a vertical 0.79 ounce (22.4 g) barrel to inject at the mold parting lines. The machine is equipped with a hydraulic core pull employing a 1,000 pound (4.45 kN) load cell to measure the force to withdraw the core from the molding. Mold part geometry consists of a 1 inch (2.54 cm) outside diameter by 2½ inch (6.35 cm) long hollow cylinder having 8 longitudinal splines on the core side to increase metal-plastic interface area. The molding is done with a Controlled Process, Inc. 3-stage process control to control and monitor the fill-pack-hold times and pressures. Holding pressures vary to obtain a range of residual mold pressures at the instant of mold core withdrawal. Mold release force versus residual mold pressure data can thus be obtained over the range of hydraulic holding pressures available.

The molding conditions employed are a constant barrel temperature of 300°C and a mold temperature of 95°C. The fill and pack pressures were held constant at Process Control set pressures of 10,000 and 1,000 psi (68.9 and 6.89 MPa), which resulted in very consistent peak mold pressures, fill times, and pack times.

The following Table I shows the variation of mold release and residual pressure for the product of Example III versus a polycarbonate control containing no lubricant.

TABLE I

| Residual Pressure in psi (MPa) | Release Pressure with Lubricant in pounds force (kN) | Release Pressure without Lubricant in pounds force (kN) | Difference in pounds force (kN) |
|---|---|---|---|
| 500 (3.45) | 250(1.11) | 260(1.16) | 10(0.04) |
| 1000 (6.89) | 200(0.89) | 240(1.07) | 40(0.18) |
| 1500(10.34) | 160(0.71) | 210(0.93) | 50(0.22) |
| 2000(13.79) | 120(0.53) | 200(0.89) | 80(0.36) |
| 2500(17.24) | 130(0.58) | 230(1.02) | 100(0.44) |
| 3000(20.68) | 160(0.71) | 330(1.47) | 170(0.76) |
| 3500(24.13) | 250(1.11) | 540(2.40) | 290(1.29) |
| 4000(27.58) | 390(1.73) | 900(4.00) | 510(2.27) |
| 4500(31.03) | 570(2.54) | infinite | infinite |
| 5000(34.47) | 400(1.78) | infinite | infinite |

Products obtained herein are substantially clear articles. Similar results will be observed when using the complex ester of Example I in the above. Higher complex esters (where R is above $C_{10}$) give cloudy articles. The release pressures indicate the highly effective nature of the claimed lubricants.

**Claims for the Contracting States: BE CH DE FR GB IT LI LU NL SE**

1. A polycarbonate forming composition comprising a polycarbonate resin and from 0.01 to 1% by weight, relative to the weight of said polycarbonate resin, of an ester of formula I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

wherein y has an average value of from 3 to 12, x has a value of from 2 to 6 and each R, which may be the same or different, is an organic moiety having from 5 to 9 carbon atoms.

2. A composition as claimed in claim 1 wherein said ester satisfies one or more of the following conditions:

(a) y has an average value of from 5 to 7;
(b) x is selected from 2, 4 and 6;
(c) R is a saturated organic moiety;
(d) R is a linear organic moiety;
(e) R is the residue of capric or caprylic acid;
(f) R contains 7 or 9 carbon atoms; and
(g) R is a $C_{5-9}$ alkyl group.

3. A composition as claimed in any one of claims 1 and 2 wherein said polycarbonate resin is a phenolic carbonate resin.

4. A process for the manufacture of a polycarbonate article, said process comprising forming said article from a composition comprising in admixture a polycarbonate resin and from 0.01 to 1% by weight, relative to the weight of said polycarbonate resin of an ester of formula I (as defined in claim 1).

5. A process as claimed in claim 4 wherein said composition comprises a composition as claimed in any one of claims 1 to 3.

6. Esters of formula I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

(wherein x, y and R are as defined in claim 1).

7. Esters as claimed in claim 6 satisfying one or more of conditions (a) to (g) defined in claim 3.

8. Esters as claimed in either of claims 6 and 7 wherein R is an organic moiety having from 6 to 9 carbon atoms.

9. Use of esters of formula I (as defined in claim 1) in the manufacture of polycarbonate articles.

10. A process for the preparation of esters of formula I (as defined in claim 1) comprising incompletely esterifying pentaerythritol with a carboxylic acid of formula RCOOH (wherein R is as defined in claim 1) or an ester-forming derivative thereof and subsequently reacting pentaerythritol esters so formed. with a dicarboxylic acid of formula $HOOC(CH_2)_xCOOH$ (wherein x is as defined in claim 1) or an ester-forming derivative thereof.

11. A process as claimed in claim 10 wherein said carboxylic and dicarboxylic acids are selected from capric and caprylic and succinic and adipic acids respectively.

12. Polycarbonate articles formed from a polycarbonate composition as claimed in any one of claims 1 to 3.

**Claims for the Contracting State: AT**

1. A process for the manufacture of a polycarbonate article, said process comprising forming said article from a composition comprising in admixture a polycarbonate resin and from 0.01 to 1% by weight, relative to the weight of said polycarbonate resin, of an ester of formula I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

wherein y has an average value of from 3 to 12, x has a value of from 2 to 6 and each R, which may be the same or different, is an organic moiety having from 5 to 9 carbon atoms.

2. A process as claimed in claim 1 wherein said ester satisfies one or more of the following conditions:

(a) y has an average value of from 5 to 7;

(b) x is selected from 2, 4 and 6;

(c) R is a saturated organic moiety;

(d) R is a linear organic moiety;

(e) R is the residue of capric or caprylic acid;

(f) R contains 7 or 9 carbon atoms; and

(g) R is a $C_{5-9}$ alkyl group.

3. A process as claimed in any one of claims 1 and 2 wherein said polycarbonate resin is a phenolic carbonate resin.

4. A process for the preparation of a polycarbonate forming composition which process comprises admixing a polycarbonate resin together with from 0.01 to 1% by weight, relative to the weight of said polycarbonate resin of an ester of formula I (as defined in claim 1).

5. A process as claimed in claim 4 wherein said ester is an ester satisfying at least one of the conditions (a) to (g) defined in claim 2.

6. A process as claimed in either of claims 4 and 5 wherein said polycarbonate resin is a phenolic carbonate resin.

7. A process as claimed in any one of claims 4 to 6 wherein from 0.01 to 1 parts by weight of said ester are admixed with 100 parts by weight of said polycarbonate resin.

8. A process for the preparation of novel esters of formula I (as defined in claim 1) comprising incompletely esterifying pentaerythritol with a carboxylic acid of formula RCOOH (wherein R is as defined in claim 1) or an ester-forming derivative thereof and subsequently reacting pentaerythritol esters so formed with a dicarboxylic acid of formula $HOOC(CH_2)_xCOOH$ (wherein x is as defined in claim 1) or an ester-forming derivative thereof.

9. A process as claimed in claim 8 wherein said carboxylic and dicarboxylic acids are selected from capric and caprylic and succinic and adipic acids respectively.

10. Use of esters of formula I (as defined in claim 1) in the manufacture of polycarbonate articles.

11. Polycarbonate articles formed from a polycarbonate composition prepared according to a process as claimed in any one of claims 4 to 7.

**Patentansprüche für die Vertragsstaaten: BE CH DE FR GB IT LI LU NL SE**

1. Eine ein Polycarbonat bildende Zusammensetzung, umfassend ein Polycarbonat-Harz und 0,01 bis 1 Gew.-%, bezogen auf das Gewicht des Polycarbonat-Harzes, eines Esters der Formel I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

worin y einen Mittelwert von 3 bis 12 hat, x einen Wert von 2 bis 6 hat und die einzelnen, R gleich oder verschieden sein können und eine organische Gruppe mit 5 bis 9 Kohlenstoff-Atomen bezeichnen.

2. Zusammensetzung nach Anspruch 1, worin der Ester eine oder mehrere oder folgenden Bedingungen erfüllt:

(a) y hat einen Mittelwert von 5 bis 7;
(b) x ist aus 2, 4 und 6 ausgewählt;
(c) R ist eine gesättigte organische Gruppe;
(d) R ist eine lineare organische Gruppe;
(e) R ist der Rest der Caprin- oder Caprylsäure;
(f) R enthält 7 bis 9 Kohlenstoff-Atome;
(g) R ist eine $C_{5-9}$-Alkyl-Gruppe.

3. Zusammensetzung nach irgendeinem der Ansprüche 1 und 2, worin das Polycarbonat ein phenolisches Carbonat-Harz ist.

4. Verfahren zur Herstellung eines Polycarbonat-Gegenstandes, umfassend die Bildung des Gegenstandes aus einer Zusammensetzung, die eine Mischung eines Polycarbonat-Harzes und von 0,01 bis 1 Gew.-%, bezogen auf das Gewicht des Polycarbonat-Harzes, eines Esters der Formel I (nach Anspruch 1) umfaßt.

5. Verfahren nach Anspruch 4, worin die Zusammensetzung eine Zusammensetzung nach irgendeinem der Ansprüche 1 bis 3 umfaßt.

6. Ester der Formel I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

(worin x, y und R die in Anspruch 1 angegebenen Bedeutungen haben).

7. Ester nach Anspruch 6, die eine oder mehrere der in Anspruch 3 angegebenen Bedingungen (a) bis (g) erfüllen.

8. Ester nach einem der Ansprüche 6 oder 7, worin R eine organische Gruppe mit 6 bis 9 Kohlenstoff-Atomen ist.

9. Verwendung von Estern der Formel I (nach Anspruch 1) bei der Herstellung von Polycarbonat-Gegenständen.

10. Verfahren zur Herstellung von Estern der Formel I (nach Anspruch 1), umfassend die unvollständige Veresterung von Pentaerythrit mit einer Carbonsäure der Formel RCOOH (worin R die in Anspruch 1 angegebenen Bedeutungen hat) oder einem esterbildenden Derivat derselben und die anschließende Umsetzung der so gebildeten Pentaerythrit-Ester mit einer Dicarbonsäure der Formel $HOOC(CH_2)_xCOOH$ (worin x die in Anspruch 1 angegebenen Bedeutungen hat) oder einem esterbildenden Derivat derselben.

11. Verfahren nach Anspruch 10, worin die Carbonsäure und die Dicarbonsäure aus Caprinsäure und Caprylsäure bzw. Bernsteinsäure und Adipinsäure ausgewählt sind.

12. Polycarbonat-Gegenstände, gebildet aus einer Polycarbonat-Zusammensetzung nach irgendeinem der Ansprüche 1 bis 3.

**Patentansprüche für den Vertragsstaat: AT**

1. Verfahren zur Herstellung eines Polycarbonat-Gegenstandes, umfassend die Herstellung des Gegenstandes aus einer Zusammensetzung, die eine Mischung aus einem Polycarbonat-Harz und 0,01 bis 1 Gew.-%, bezogen auf das Gewicht des Polycarbonat-Harzes, eines Ester der Formel I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

umfaßt, worin y einen Mittelwert von 3 bis 12 hat, x einen Wert von 2 bis 6 hat und die einzelnen, R gleich oder verschieden sein können und eine organische Gruppe mit 5 bis 9 Kohlenstoff-Atomen bezeichnen.

2. Verfahren nach Anspruch 1, worin der Ester eine oder mehrere oder folgenden Bedingungen erfüllt:

(a) y hat einen Mittelwert von 5 bis 7;
(b) x ist aus 2, 4 und 6 ausgewählt;
(c) R ist eine gesättigte organische Gruppe;
(d) R ist eine lineare organische Gruppe;
(e) R ist der Rest der Caprin- oder Caprylsäure;
(f) R enthält 7 bis 9 Kohlenstoff-Atome;
(g) R ist eine $C_{5-9}$-Alkyl-Gruppe.

3. Verfahren nach irgendeinem der Ansprüche 1 und 2, worin das Polycarbonat-Harz ein phenolisches Carbonat-Harz ist.

4. Verfahren zur Herstellung einer ein Polycarbonat bildenden Zusammensetzung, umfassend das Vermischen eines Polycarbonat-Harzes mit 0,01 bis 1 Gew.-%, bezogen auf das Gewicht des Polycarbonat-Harzes, eines Esters der Formel I (nach Anspruch 1).

5. Verfahren nach Anspruch 4, worin der Ester ein Ester ist, der wenigstens eine der Bedingungen (a) bis (g) nach Anspruch 2 erfüllt.

6. Verfahren nach einem der Ansprüche 4 oder 5, worin das Polycarbonat-Harz ein phenolisches Carbonat-Harz ist.

7. Verfahren nach irgendeinem der Ansprüche 4 bis 6, worin 0,01 bis 1 Gew.-Teile des Esters mit 100 Gew.-Teilen des Polycarbonat-Harzes vermischt werden.

8. Verfahren zur Herstellung neuer Ester der Formel I (nach Anspruch 1) umfassend die unvollständige Veresterung von Pentaerythrit mit einer Carbonsäure der Formel RCOOH (worin R die in Anspruch 1 angegebenen Bedeutungen hat) oder einem esterbildenden Derivat derselben und die anschließende Umsetzung der so gebildeten Pentaerythrit-Ester mit einer Dicarbonsäure der Formel $HOOC(CH_2)_xCOOH$ (worin x die in Anspruch 1 angegebenen Bedeutungen hat) oder einem esterbildenden Derivat derselben.

11. Verfahren nach Anspruch 8, worin die Carbonsäure und die Dicarbonsäure aus Caprinsäure und Caprylsäure bzw. Bernsteinsäure und Adipinsäure ausgewählt sind.

10. Verwendung von Estern der Formel I (nach Anspruch 1) bei der Herstellung von Polycarbonat-Gegenständen.

11. Polycarbonat-Gegenstände, gebildet aus einer Polycarbonat-Zusammensetzung, die mittels eines Verfahrens nach irgendeinem der Ansprüche 4 bis 7 hergestellt ist.

**Revendications pour les Etats contractants: BE CH DE FR GB IT LI LU NL SE**

1. Une composition génératrice de polycarbonate comprenant une résine de polycarbonate et de 0,01 à 1% en poids, relativement au poids de ladite résine de polycarbonate, d'un ester de formule (I)

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

dans laquelle y a une valeur moyenne de 3 à 12, x a une valeur de 2 à 6 et chaque R, semblable ou différent, est un fragment organique ayant de 5 à 9 atomes de carbone.

2. Une composition selon la revendication 1, dans laquelle ledit ester satisfait à une ou plusieurs des conditions suivantes:

(a) y a une valeur moyenne de 5 à 7;
(b) x est choisi parmi 2, 4 et 6;
(c) R est un fragment organique saturé;
(d) R est un fragment organique linéaire;
(e) R est le reste de l'acide caprique ou caprylique;
(f) R contient 7 ou 9 atomes de carbone; et
(g) R est un radical alcoyle en $C_{5-9}$.

3. Une composition selon l'une quelconque des revendications 1 et 2, dans laquelle ledit polycarbonate est une résine de carbonate phénolique.

4. Un procédé pour la fabrication d'un article en polycarbonate, ledit procédé comprenant la formation dudit article à partir d'une composition comprenant en mélange une résine de polycarbonate et de 0,01 à 1% en poids, relativement au poids de ladite résine de polycarbonate, d'un ester de formule I (comme défini dans la revendication 1).

5. Un procédé selon la revendication 4, dans lequel ladite composition comprend une composition selon l'une quelconque des revendications 1 à 3.

6. Esters de formule I

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

(dans laquelle x, y et R sont comme défini dans la revendication 1).

7. Esters selon la revendication 6 satisfaisant à une ou plusieurs des conditions (a) à (g) définies dans la revendication 3.

8. Esters selon l'une des revendications 6 et 7, dans lesquels R est un fragment organique ayant 6 à 9 atomes de carbone.

9. Utilisation d'esters de formule I (comme défini dans la revendication 1) dans la fabrication d'articles en polycarbonate.

10. Un procédé pour la préparation d'esters de formule I (comme défini dans la revendication 1) comprenant l'estérification partielle du pentaérythritol avec un acide carboxylique de formule RCOOH (dans laquelle R est comme défini dans la revendication 1) ou un dérivé générateur d'esters de celui-ci puis la réaction des esters de pentaérythritol ainsi formés avec un acide dicarboxylique de formule $HOOC(CH_2)_xCOOH$ (dans laquelle x est comme défini dans la revendication 1) ou un dérivé générateur d'esters de celui-ci.

11. Un procédé selon la revendication 10, dans lequel lesdits acides carboxylique et dicarboxylique sont choisis respectivement parmi les acides caprique et caprylique et succinique et adipique.

12. Articles en polycarbonate formés à partir d'une composition de polycarbonate comme revendiqué dans l'une quelconque des revendications 1 à 3.

**Revendications pour l'Etat contractant: AT**

1. Un procédé pour la fabrication d'un article en polycarbonate, ledit procédé comprenant la formation dudit article à partir d'une composition comprenant en mélange une résine de polycarbonate et de 0,01 à 1% en poids, relativement au poids de ladite résine de polycarbonate, d'un ester de formule (I)

$$(RCO_2CH_2)_3CCH_2O[CO(CH_2)_xCO_2CH_2C(CH_2O_2CR)_2CH_2O]_yCO(CH_2)_xCO_2CH_2C(CH_2O_2CR)_3 \quad (I)$$

dans laquelle y a une valeur moyenne de 3 à 12, x a une valeur de 2 à 6 et chaque R, semblable ou différent, est un fragment organique ayant de 5 à 9 atomes de carbone.

2. Un procédé selon la revendication 1, dans lequel ledit ester satisfait à une ou plusieurs des conditions suivantes:

(a) y a une valeur moyenne de 5 à 7;
(b) x est choisi parmi 2, 4 et 6;
(c) R est un fragment organique saturé;
(d) R est un fragment organique linéaire;
(e) R est le reste de l'acide caprique ou caprylique;
(f) R contient 7 ou 9 atomes de carbone; et
(g) R est un radical alcoyle en $C_{5-9}$.

3. Une procédé selon l'une quelconque des revendications 1 et 2, dans lequel ladite résine de polycarbonate est une résine de carbonate phénolique.

4. Un procédé pour la préparation d'une composition génératrice de polycarbonate, lequel procédé comprend le mélange d'une résine de polycarbonate avec de 0,01 à 1% en poids, relativement au poids de ladite résine de polycarbonate, d'un ester de formule I (comme défini dans la revendication 1).

5. Un procédé comme revendiqué dans la revendication 4, dans lequel ledit ester est un ester satisfaisant à au moins une des conditions (a) à (g) définies dans la revendication 2.

6. Un procédé selon l'une quelconque des revendications 4 et 5, dans lequel ladite résine de polycarbonate est une résine de carbonate phénolique.

7. Un procédé selon l'une quelconque des revendications 4 à 6, dans lequel on mélange de 0,01 à 1 partie en poids dudit ester avec 100 parties en poids de ladite résine de polycarbonate.

8. Un procédé pour la préparation des nouveaux esters de formule I (comme défini dans la revendication 1), comprenant l'estérification partielle du pentaérythritol avec un acide carboxylique de formule RCOOH (dans laquelle R est comme défini dans la revendication 1) ou un dérivé générateur d'esters de celui-ci puis la réaction des esters de pentaérythritol ainsi formés avec un acide dicarboxylique de formule $HOOC(CH_2)_xCOOH$ (dans laquelle x est comme défini dans la revendication 1) ou un dérivé générateur d'esters de celui-ci.

9. Un procédé selon la revendication 8, dans lequel lesdits acides carboxylique et dicarboxylique sont choisis respectivement parmi les acides caprique et caprylique et succinique et adipique.

10. L'utilisation des esters de formule I (comme défini dans la revendication 1) dans la fabrication d'articles en polycarbonate.

11. Articles en polycarbonate formés à partir d'une composition de polycarbonate préparée selon un procédé comme revendiqué dans l'une quelconque des revendications 4 à 7.